# EUROPEAN PATENT SPECIFICATION

(11) **EP 3 789 453 B1**
(45) Date of publication and mention of the grant of the patent: **10.09.2025**
(21) Application number: 19796798.7
(22) Date of filing: 30.04.2019
(51) Int. Cl.: C08L 69/00, C08L 51/00, C08L 51/04, C08L 25/12, C08K 5/1515

(54) **THERMOPLASTIC RESIN COMPOSITION AND MOLDED ARTICLE COMPRISING SAME**
THERMOPLASTISCHE HARZZUSAMMENSETZUNG UND FORMARTIKEL DAMIT
COMPOSITION DE RÉSINE THERMOPLASTIQUE ET ARTICLE MOULÉ COMPRENANT CELLE-CI

(30) Priority: 30.04.2018 KR 20180049964; 29.04.2019 KR 20190050019
(43) Date of publication of application: 10.03.2021
(73) Proprietor: Lotte Chemical Corporation, Seoul, 05551 (KR)
(72) Inventor: HONG, Jaekeun, Uiwang-si, Gyeonggi-do 16073 (KR); KWON, Keehae, Uiwang-si, Gyeonggi-do 16073 (KR); KIM, Doo Young, Uiwang-si, Gyeonggi-do 16073 (KR); PARK, Jungeun, Uiwang-si, Gyeonggi-do 16073 (KR)
(74) Representative: Germain Maureau
(86) International application number: PCT/KR2019/005179
(87) International publication number: WO 2019/212222

(56) References cited:
- WO-A1-2016/007592
- JP-A- H05 179 122
- KR-A- 960 701 953
- KR-B1- 100 253 954
- KR-B1- 101 236 655
- US-A- 5 336 701
- US-A1- 2007 010 618
- US-A1- 2016 185 959
- GRASSIE N ET AL: "JOURNAL OF POLYMER SCIENCE: PART A-1 Thermal Degradation of Copolymers of Styrene and Acrylonitrile. I. PreIiminary Investigation of Changes in Molecular Weight and the Formation of Volatile Products", vol. 8, 1 January 1970 (1970-01-01), pages 2653 - 2664, XP055873562, Retrieved from the Internet <URL:http://dx.doi.org/10.1002/pol.1970.150080930> [retrieved on 20211215]

## Description

### [Technical Field]

A thermoplastic resin composition and a molded article including the same are disclosed.

### [Background Art]

An acrylate-styrene-acrylonitrile (ASA) resin has excellent weather resistance and thus is widely used for outdoor building materials, vehicle interior/exterior materials, etc. However, since the ASA resin has insufficient impact resistance and the like, in order to be applied for the uses requiring high impact strength, an acrylate-based rubbery polymer content of the ASA resin should be increased, but when the acrylate-based rubbery polymer content is increased, heat resistance and the like are deteriorated, and accordingly, the ASA resin has a limit in being applied for the use requiring high heat resistance properties, for example, the vehicle interior/exterior materials, etc.

As an alternative to this, the ASA resin may be alloyed with a polycarbonate (PC) resin having excellent heat resistance in order to compensate for the heat resistance and the impact resistance, and this PC/ASA resin may be applied to various vehicle interior/exterior materials.

In this way, when the PC/ASA resin is applied to the vehicle interior/exterior materials, heat resistance and low gloss may be required depending on parts to be applied. In general, in order to impart the low gloss to the PC/ASA resin, a method of adding a separate matting agent and the like thereto is considered.

However, even though this matting agent secures the low gloss, other properties of the PC/ASA resin such as impact resistance, heat resistance, and the like may be greatly deteriorated. Accordingly, a method of improving the low gloss property without deteriorating the basic properties of the PC/ASA resin is required.

WO2016/007592A1 discloses a low gloss thermoplastic composition comprising a polycarbonate; a copolymer derived from a copolymerization of a vinyl aromatic monomer and an ethylenically unsaturated nitrile monomer; an impact modifier that comprises acrylonitrile-styrene-acrylate; a first gel-type low gloss additive; where the first gel-type low gloss additive is an epoxy cross-linked styrene acrylonitrile dispersed in polycarbonate; a second gel-type low gloss additive; where the second gel-type low gloss additive is an epoxy cross-linked styrene acrylonitrile dispersed in polystyrene; a first polymethylmethacrylate; and a second polymethylmethacrylate; where the first polymethylmethacrylate and the second polymethylmethacrylate are present in a total amount of 1 to 25 wt%, based on the total weight of the composition; and wherein the first polymethylmethacrylate has a higher weight average molecular weight than the second polymethylmethacrylate.

Grassie N. et al, Journal of Polymer Science: ˙˙Part A-1, Thermal Degradation of Copolymers of Styrene and Acrylonitrile. I. Preliminary Investigation of Changes in Molecular Weight and the Formation of Volatile Products, 1970, pages 2653-2664 shows that the aromatic vinyl-vinyl cyanide polymer (SAN) undergoes substantial changes of molecular weight characteristics under thermal exposition.

US2016/185959A discloses a thermoplastic resin composition for automotive interior components having excellent impact resistance with minimal occurrence of gas silver streaks while providing low gloss properties, said composition including a base resin comprising about 55 wt % to about 90 wt % of a polycarbonate resin and about 10 wt % to about 45 wt % of a vinyl cyanide compound-aromatic vinyl compound copolymer; about 5 parts by weight to about 30 parts by weight of an impact modifier; and about 1 part by weight to about 8 parts by weight of a matting agent, each based on about 100 parts by weight of the base resin.

US2007/010618A1 discloses a thermoplastic composition having excellent low gloss performance and mechanical performance, which comprises a polycarbonate, an acrylonitrile-styrene-acrylate terpolymer, and a low gloss additive.

### [Disclosure]

### [Description of the Drawings]

### [Technical Problem]

A thermoplastic resin composition having greatly improved low gloss property while maintaining heat resistance and impact resistance is provided.

Another embodiment provides a molded article including the thermoplastic resin.

### [Technical Solution]

According to an embodiment, a thermoplastic resin composition includes, based on 100 parts by weight of a base resin including (A) 40 to 80 wt% of a polycarbonate resin; (B) 5 to 35 wt% of an acrylate-based graft copolymer; and (C) 10 to 40 wt% of an aromatic vinyl-vinyl cyanide copolymer having a weight average molecular weight of 80,000 g/mol to 200,000 g/mol, (D) an epoxide group-containing reactive additive, and (E) an aromatic vinyl-vinyl cyanide copolymer having a weight average molecular weight of greater than or equal to 4,000,000 g/mol, wherein a weight ratio of the aromatic vinyl-vinyl cyanide copolymer (E) having a weight average molecular weight of greater than or equal to 4,000,000 g/mol to the reactive additive (D) is 1 to 12, said weight average molecular weight being measured by gel permeation chromatography determined as described below.

The polycarbonate resin (A) may be prepared by a melt polymerization method.

Based on 100 parts by weight of the base resin, the reactive additive (D) is included in an amount of 0.1 parts by weight to 5 parts by weight, and the aromatic vinyl-vinyl cyanide copolymer (E) having a weight average molecular weight of greater than or equal to 4,000,000 g/mol is included in an amount of 0.5 parts by weight to 10 parts by weight.

The reactive additive (D) may include a compound represented by Chemical Formula 1.

[Chemical Formula 1] (Q)m - L - (R)n

wherein, in Chemical Formula 1,
Q and R are independently one or more selected from moieties represented by Chemical Formula A to Chemical Formula C,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1, 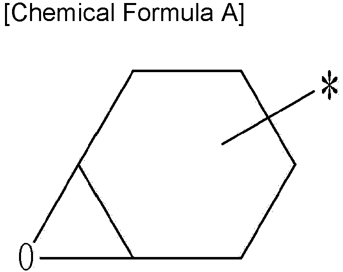 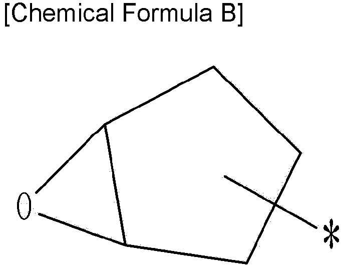 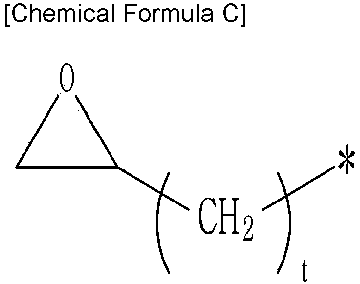
wherein, in Chemical Formula A to Chemical Formula C, t is an integer of 1 to 10 and * indicates a linking portion.

The compound represented by Chemical Formula 1 is represented by Chemical Formula 2. 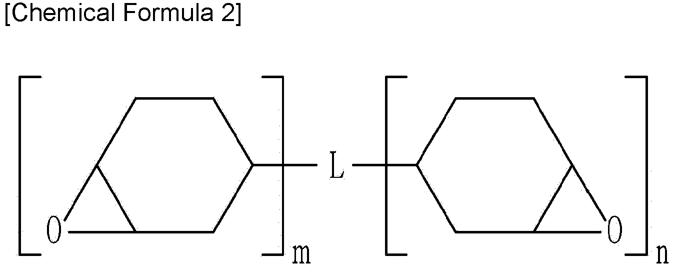 In Chemical Formula 2,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1.
L may be selected from a substituted or unsubstituted C1 to C20 heteroalkylene group including 1 to 3 heteroatoms selected from N, O, S, and Si, a substituted or unsubstituted C2 to C20 heterocycloalkylene group including 1 to 3 heteroatoms selected from N, O, S, and Si, and a substituted or unsubstituted C1 to C20 heteroarylene group including 1 to 3 heteroatoms selected from N, O, S, and Si.
L may be selected from a C2 to C20 alkylene group having -(CH₂)₂- unit structure, a C6 to C20 cycloalkylene group, and a C6 to C20 arylene group,
wherein the -(CH₂)₂- units structure may be substituted with an ester group.

The acrylate-based graft copolymer (B) may include an acrylate-based rubber polymer having an average particle diameter of 100 nm to 300 nm.

The acrylate-based graft copolymer (B) may be obtained by graft polymerization of 40 wt% to 60 wt% of a mixture of an aromatic vinyl compound and a vinyl cyanide compound, to 40 wt% to 60 wt% of an acrylate-based rubber polymer.

The acrylate-based graft copolymer (B) may be an acrylonitrile-styrene-acrylate graft copolymer.

The aromatic vinyl-vinyl cyanide copolymer (C) may be a copolymer of a monomer mixture including 60 wt% to 85 wt% of an aromatic vinyl compound and 15 wt% to 40 wt% of a vinyl cyanide compound.

The (C) aromatic vinyl-vinyl cyanide copolymer may have a weight average molecular weight of 80,000 g/mol to 200,000 g/mol.

The aromatic vinyl-vinyl cyanide copolymer (E) having a weight average molecular weight of greater than or equal to 4,000,000 g/mol may be a styrene-acrylonitrile copolymer having a weight average molecular weight of greater than or equal to 4,000,000 g/mol.

The thermoplastic resin composition may further include at least one additive selected from a flame retardant, a nucleating agent, a coupling agent, a filler, a plasticizer, an impact modifier, a lubricant, an antibacterial agent, a releasing agent, a heat stabilizer, an antioxidant, an inorganic material, an ultraviolet (UV) stabilizer, an antistatic agent, a pigment, and a dye.

Meanwhile, according to another embodiment, a molded article using the aforementioned thermoplastic resin composition is provided.

### [Advantageous Effects]

While maintaining excellent both heat resistance and impact resistance, it is possible to provide a thermoplastic resin composition having significantly improved low gloss property.

### [Mode for Invention]

Hereinafter, embodiments of the present invention are described in detail. However, these embodiments are exemplary, the present invention is not limited thereto and the present invention is defined by the scope of claims.

In the present specification, "copolymerization" means block copolymerization or random copolymerization, and "copolymer" means a block copolymer or a random copolymer.

In the present specification, unless otherwise specified, an average particle diameter refers to a volume average diameter, and refers to a Z-average mean particle diameter measured using a dynamic light scattering analyzer.

In the present specification, when a definition is not otherwise provided, "substituted" refers to replacement of hydrogen of a compound by a substituent selected from a halogen atom (F, Br, Cl, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, vinyl group, a C1 to C20 alkyl group, a C2 to C20 alkenyl group, a C2 to C20 alkynyl group, a C6 to C30 aryl group, a C7 to C30 arylalkyl group, a C6 to C30 allyl group, a C1 to C30 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C3 to C30 heterocycloalkyl group, and a combination thereof.

In addition, "unsubstituted" means that a hydrogen atom remains a hydrogen atom without being substituted with another substituent.

In addition, in the present specification, when a definition is not otherwise provided, 'hetero' refers to one including 1 to 3 heteroatoms selected from **N, O,** S, P, and Si.

An embodiment provides a thermoplastic resin composition having improved low gloss property while maintaining both heat resistance and impact resistance.

The thermoplastic resin composition includes, based on 100 parts by weight of a base resin (A) 40 to 80 wt% of a polycarbonate resin; (B) 5 to 35 wt% of an acrylate-based graft copolymer; and (C) 10 to 40 wt% of an aromatic vinyl-vinyl cyanide copolymer; (D) an epoxide group-containing reactive additive, and (E) an aromatic vinyl-vinyl cyanide copolymer having a weight average molecular weight of greater than or equal to 4,000,000 g/mol, wherein a weight ratio of the aromatic vinyl-vinyl cyanide copolymer (E) having a weight average molecular weight of greater than or equal to 4,000,000 g/mol to the reactive additive (D) is 1 to 12.

Hereinafter, each component of the thermoplastic resin composition is described in detail.

### (A) Polycarbonate Resin

In the thermoplastic resin composition, the polycarbonate is a polyester having a carbonate bond.

The polycarbonate resin (A) may be prepared using two methods of an interfacial polymerization method (also called a solvent method or a phosgene method) and a melt polymerization method. In an embodiment, the polycarbonate resin (A) may include a polycarbonate resin prepared by the melt polymerization method. Meanwhile, in an embodiment, the polycarbonate resin (A) may be prepared by the melt polymerization method.

When preparing a polycarbonate resin through the melt polymerization method, for example, the process of synthesizing a polycarbonate may include separating phenol by using a transesterification reaction of an aromatic diol compound and a diaryl carbonate compound.

Examples of the aromatic diol compound may be 4,4'-biphenol, 2,2-bis (4-hydroxyphenyl)propane, 2,4-bis(4-hydroxyphenyl)-2-methylbutane, 1,1-bis (4-hydroxyphenyl)cyclohexane, 2,2-bis(3-methyl-4-hydroxyphenyl)propane, 2,2-bis(3,5-dimethyl-4-hydroxyphenyl)propane, 2,2-bis(3-chloro-4-hydroxyphenyl)propane, 2,2-bis(3,5-dichloro-4-hydroxyphenyl)propane, and the like. Desirably, 2,2-bis(4-hydroxyphenyl)propane, 2,2-bis(3,5-dichloro-4-hydroxyphenyl)propane, 2,2-bis(3,5-dimethyl-4-hydroxyphenyl)propane, 1,1-bis (4-hydroxyphenyl)cyclohexane may be exemplified and more desirably 2,2-bis-(4-hydroxyphenyl)propane that is referred to as "bisphenol A" may be used.

Examples of the diaryl carbonate may include diphenyl carbonate, ditolyl carbonate, bis(chlorophenyl) carbonate, m-cresyl carbonate, dinaphthyl carbonate, bis(diphenyl) carbonate, and the like, but these may be used alone or as two more than one species may be used. For example, diphenyl carbonate may be used.

The polycarbonate resin (A) may have a weight average molecular weight of 5,000 to 200,000 g/mol and specifically, 5,000 to 40,000 g/mol for mechanical properties and moldability. When the weight average molecular weight of the polycarbonate resin (A) is within the above range, improved impact resistance and fluidity may be obtained. In addition, two or more polycarbonate resins having different weight average molecular weight ranges may be mixed and used in order to meet desired fluidity.

In general, among the two methods of producing a polycarbonate resin, a phosgene gas used in the interfacial polymerization method has serious toxicity, and a problem has been raised in terms of environmental safety.

On the other hand, the melt polymerization method is a method of preparing a polycarbonate resin by separating phenol in a transesterification reaction without using a phosgene gas, so it is environmentally-friendly compared with the aforementioned interfacial polymerization method.

However, in the case of a polycarbonate resin prepared by the melt polymerization method, the polycarbonate resin is likely to undergo an unintended hydrolysis reaction due to external light or heat during the molding or use process, and unintended deterioration of physical properties may occur. In addition, when the content of the polycarbonate resin is reduced to solve this problem, there is a concern that the mechanical properties of the thermoplastic resin composition including the same may be deteriorated.

However, the polycarbonate resin (A) according to an embodiment may include those prepared by the melt polymerization method as described above, or may be prepared by the melt polymerization method. That is, since the polycarbonate resin (A) according to an embodiment includes at least a polycarbonate resin prepared by a melt polymerization method, a content of the hydroxyl group at the terminal end of the polycarbonate polymer chain may be somewhat higher than a polycarbonate resin prepared by the interfacial polymerization method.

For example, the polycarbonate resin (A) may have a terminal hydroxyl group content of greater than or equal to 15 mol%, for example greater than or equal to 20 mol%, for example greater than or equal to 25 mol%, and for example less than or equal to 50 mol%, for example less than or equal to 45 mol%, for example less than or equal to 40 mol%, for example 15 mol% to 50 mol%, for example 20 mol% to 40 mol%.

When the hydroxyl group included in the polycarbonate resin is exposed to external heat, ultraviolet rays, etc. during various processing processes (e.g., injection molding process) of a thermoplastic composition including the polycarbonate resin or in the process of using a molded product using the thermoplastic resin composition, unintended hydrolysis reactions may occur.

However, the thermoplastic composition according to an embodiment may deactivate the hydroxyl groups in the polycarbonate resin (A) by using the epoxide group-containing reactive additive (D), and as a result, occurrence of an unintended hydrolysis reaction in the polycarbonate resin (A) may be prevented by external heat, ultraviolet rays or the like during various processing or use of the thermoplastic composition. The specific configuration and function of the epoxide group-containing reactive additive (D) is described later.

The polycarbonate resin (A) may be included in an amount of greater than or equal to at least 40 wt%, for example greater than or equal to 50 wt%, for example greater than or equal to 60 wt%, and for example less than or equal to 80 wt%, for example less than or equal to 70 wt%, for example 40 wt% to 80 wt%, for example 50 wt% to 80 wt%, for example 50 wt% to 70 wt% based on 100 wt% of the base resin.

When the content of the polycarbonate resin (A) in the base resin is less than 40 wt%, heat resistance of the thermoplastic resin composition may be deteriorated. On the other hand, when the content of the polycarbonate resin (A) in the base resin is greater than 80 wt%, impact resistance may be lowered, and it becomes difficult to deactivate the terminal hydroxyl groups included in the polycarbonate resin to the desired level, so deterioration of physical properties may occur due to hydrolysis in the molding process of the thermoplastic composition.

### (B) Acrylate-based Graft Copolymer

In an embodiment, the acrylate-based graft copolymer (B) performs a function of enhancing weather resistance and impact resistance of the thermoplastic resin composition by alloying with the polycarbonate resin (A).

In an embodiment, the acrylate-based graft copolymer (B) may be prepared by graft polymerization of a monomer mixture including an aromatic vinyl compound and a vinyl cyanide compound, to an acrylate-based rubber polymer.

The acrylate-based graft copolymer (B) may be prepared according to any method known to a person skilled in the art.

As the preparation method, conventional polymerization methods, for example, emulsion polymerization, suspension polymerization, solution polymerization, and bulk polymerization may be used. As a non-limiting example, it may be prepared by a method including preparing an acrylate-based rubber polymer, and then graft-polymerizing a monomer mixture including an aromatic vinyl compound and a vinyl cyanide compound may be on a core formed of one or more layers of the acrylate-based rubber polymer to form one or more shell layers.

The acrylate-based rubber polymer may be prepared using an acrylate-based monomer as a main monomer. The acrylate-based monomer may be one or more selected from ethyl acrylate, butyl acrylate, 2-ethylhexyl acrylate, and hexyl acrylate, but is not limited thereto.

The acrylate-based monomer may be copolymerized with one or more radically polymerizable other monomers. When copolymerized, an amount of the one or more radically polymerizable other monomers may be 5 wt% to 30 wt%, specifically 10 wt% to 20 wt%, based on a total weight of the acrylate-based rubber polymer.

The aromatic vinyl compound included in the shell layer may be at least one selected from styrene, α-methylstyrene, p-methylstyrene, pt-butylstyrene, 2,4-dimethylstyrene, chlorostyrene, vinyltoluene, and vinylnaphthalene, but is not limited thereto.

The vinyl cyanide compound included in the shell layer may be at least one selected from acrylonitrile, methacrylonitrile, and fumaronitrile, but is not limited thereto.

Based on 100 wt% of a total weight of the acrylate-based graft copolymer (B), the acrylate-based rubber polymer may be 30 wt% to 70 wt%, for example 40 wt% to 60 wt%.

Meanwhile, the monomer mixture including the aromatic vinyl compound and the vinyl cyanide compound graft-polymerized to the acrylate-based rubber polymer may be 30 wt% to 70 wt%, for example 40 wt% to 60 wt%.

In the shell layer formed by graft-polymerization of the monomer mixture including the aromatic vinyl compound and the vinyl cyanide compound to the acrylate-based rubber polymer, the aromatic vinyl compound may be included in an amount of 50 wt% to 80 wt%, specifically, 60 wt% to 70 wt% based on a total weight of the shell layer and the vinyl cyanide compound may be included in an amount of 20 wt% to 50 wt%, specifically 30 wt% to 40 wt%, based on a total weight of the shell layer.

In an embodiment, the acrylate-based graft copolymer (B) may be an acrylate-styrene-acrylonitrile graft copolymer.

As a non-limiting example, the acrylate-styrene-acrylonitrile graft copolymer may be a core-shell type acrylate-styrene-acrylonitrile graft copolymer prepared by graft polymerization of a mixture of acrylonitrile and styrene, to a butyl acrylate rubbery polymer core having two or more layers including an inner core in which butyl acrylate and styrene are copolymerized and an outer core composed of a butyl acrylate polymer, through an emulsion polymerization method.

In an embodiment, the acrylate-based graft copolymer (B) has an average particle diameter of the acrylate-based rubber polymer of greater than or equal to 100 nm, for example greater than or equal to 150 nm, and for example, less than or equal to 300 nm, for example less than or equal to 250 nm, for example, 100 nm to 300 nm, for example 150 nm to 250 nm.

When the average particle diameter of the acrylate-based rubber polymer in the acrylate-based graft copolymer (B) is less than 100 nm, overall mechanical properties such as impact resistance and tensile strength of the thermoplastic resin composition including the same may be deteriorated.

On the other hand, when the average particle diameter of the acrylate-based rubber polymer in the acrylate-based graft copolymer (B) exceeds 300 nm, fluidity and processability of the thermoplastic resin composition including the same may decrease.

The acrylate-based graft copolymer (B) may be included in an amount of greater than or equal to 5 wt%, for example greater than or equal to 10 wt%, for example greater than or equal to 15 wt% and for example less than or equal to 35 wt%, for example less than or equal to 30 wt%, for example less than or equal to 25 wt% based on 100 wt% of the base resin.

When the content of the acrylate-based graft copolymer (B) in the base resin is less than 5 wt%, impact resistance of the thermoplastic resin composition may be reduced, and when the content of the acrylate-based graft copolymer (B) in the base resin may exceed 35 wt%, mechanical rigidity and colorability of the thermoplastic resin composition may be deteriorated.

### (C) Aromatic Vinyl-Vinyl Cyanide Copolymer

In an embodiment, the aromatic vinyl-vinyl cyanide copolymer (C) performs a function of maintaining compatibility between components of the thermoplastic resin composition at a certain level.

In an embodiment, the aromatic vinyl-vinyl cyanide copolymer (C) may be a copolymer of an aromatic vinyl compound and a vinyl cyanide compound. The aromatic vinyl-vinyl cyanide copolymer (C) has a weight average molecular weight of greater than or equal to 80,000 g/mol, for example greater than or equal to 85,000 g/mol, for example greater than or equal to 90,000 g/mol, and less than or equal to 200,000 g/mol, for example less than or equal to 150,000 g/mol, for example 80,000 g/mol to 200,000 g/mol, for example 80,000 g/mol to 150,000 g/mol.

In the present invention, the weight average molecular weight is measured by dissolving a particulate sample in tetrahydrofuran (THF) and using 1200 series Gel Permeation (GP) chromatography made by Agilent Technologies Inc. (using LF-804 made by Showa Denko K.K. as a column and polystyrene made by Showa Denko K.K. as a standard sample).

The aromatic vinyl compound may be at least one selected from styrene, α-methylstyrene, p-methylstyrene, p-t-butylstyrene, 2,4-dimethylstyrene, chlorostyrene, vinyltoluene, and vinylnaphthalene.

The vinyl cyanide compound may be one or more selected from acrylonitrile, methacrylonitrile, and fumaronitrile.

In an embodiment, the aromatic vinyl-vinyl cyanide copolymer (C) may be a styrene-acrylonitrile copolymer (SAN) having a weight average molecular weight of 80,000 g/mol to 200,000 g/mol.

In an embodiment, the vinyl cyanide compound may be included in an amount of greater than or equal to 10 wt%, for example, greater than or equal to 15 wt%, for example, greater than or equal to 20 wt% and for example, less than or equal to 50 wt%, for example, less than or equal to 40 wt%, for example, 10 wt% to 50 wt%, for example, 15 wt% to 40 wt%, for example, 20 wt% to 40 wt% based on 100 wt% of the aromatic vinyl-vinyl cyanide copolymer (C).

In an embodiment, the aromatic vinyl-vinyl cyanide copolymer (C) may be included in an amount of greater than or equal to 10 wt%, for example, greater than or equal to 15 wt%, for example, greater than or equal to 20 wt% and for example, less than or equal to 40 wt%, for example, less than or equal to 35 wt%, for example, less than or equal to 30 wt%, for example, 10 wt% to 40 wt%, for example, 20 wt% to 40 wt%, for example, 20 wt% to 30 wt% based on 100 wt% of a base resin.

When the aromatic vinyl-vinyl cyanide copolymer (C) is included in an amount of less than or equal to 10 wt%, mechanical strength and heat resistance of the thermoplastic resin composition may be deteriorated, and when the aromatic vinyl-vinyl cyanide copolymer (C) is included in an amount of greater than 40 wt%, impact resistance and weather resistance of the thermoplastic resin composition may be deteriorated.

### (D) Epoxide Group-Containing Reactive Additive

In an embodiment, the epoxide group-containing reactive additive, as described above, deactivates the hydroxyl group in the polycarbonate resin (A) and conducts a function of preventing generation of a hydrolysis reaction in the polycarbonate resin (A). However, the epoxide group-containing reactive additive according to an embodiment also conducts a function of improving low gloss characteristics of the thermoplastic resin composition in addition to the above function.

First of all, as for a specific method of deactivating the hydroxyl group in the polycarbonate resin (A), the epoxide group in the reactive additive (D) may form a chemical bond with the hydroxyl group at the terminal end of a polymer chain of the polycarbonate resin.

In an embodiment, the epoxide group in the reactive additive (D) may have a ring-opening reaction by the hydroxyl group included in the polycarbonate resin. Herein, an oxygen atom and either one of two carbon atoms comprising the epoxide group may form an ether bond with the hydroxyl group included in the polycarbonate resin.

In other words, in an embodiment, the reactive additive (D) may cap the hydroxyl group with high reactivity included in the polycarbonate resin with the epoxide group and thus deactivate the hydroxyl group. Accordingly, the reactive additive (D) may effectively deactivate the hydroxyl group included in the polycarbonate resin (A) and thus provide a thermoplastic resin composition having excellent light resistance and low gloss characteristics.

In an embodiment, the reactive additive (D) may include a compound represented by Chemical Formula 1.

[Chemical Formula 1] (Q)m - L - (R)n

In Chemical Formula 1,
Q and R are independently one or more selected from moieties represented by Chemical Formula A to Chemical Formula C,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1, 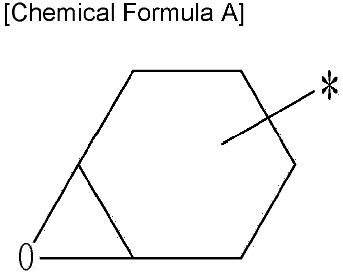 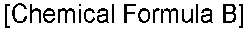 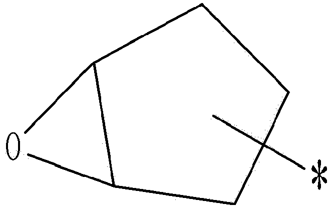 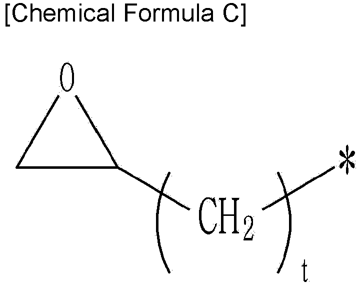
wherein, in Chemical Formula A to Chemical Formula C, t is an integer of 1 to 10 and * indicates a linking portion.

In Chemical Formula 1, Q and R may be selected as the same moiety or may be selected as different moieties.

The compound represented by Chemical Formula 1 may be represented by Chemical Formula 2. 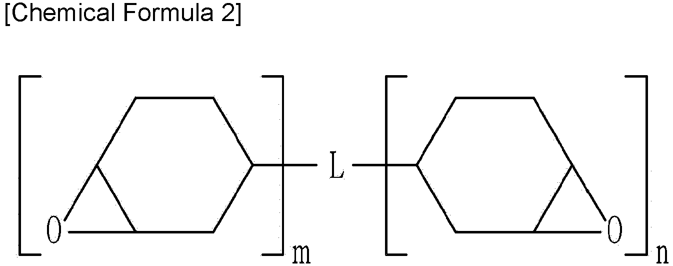 In Chemical Formula 2,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1.
In an embodiment, L may be selected from a substituted or unsubstituted C1 to C20 heteroalkylene group including 1 to 3 heteroatoms selected from **N, O,** S, and Si, a substituted or unsubstituted C2 to C20 heterocycloalkylene group including 1 to 3 heteroatoms selected from **N,** O, S, and Si, and a substituted or unsubstituted C1 to C20 heteroarylene group including 1 to 3 heteroatoms selected from **N,** O, S, and Si.

Meanwhile, L may be selected from a C2 to C20 alkylene group having - (CH₂)₂- unit structure, a C6 to C20 cycloalkylene group, and a C6 to C20 arylene group, and the -(CH₂)₂- units structure may be substituted with an ester group.

The reactive additive (D) may be composed of one type of compound satisfying Chemical Formula 1 or a mixture of two types of compounds satisfying Chemical Formula 1.

In an embodiment, the reactive additive (D) may be included in an amount of greater than 0 part by weight, for example, greater than or equal to 0.1 parts by weight, for example, greater than or equal to 0.2 parts by weight, and less than 5 parts by weight, for example, less than or equal to 4 parts by weight, for example, less than or equal to 3 parts by weight, for example, less than or equal to 2 parts by weight, for example, 0.1 parts by weight to 5 parts by weight, for example, 0.1 parts by weight to 3 parts by weight, for example, 0.1 parts by weight to 2 parts by weight based on 100 parts by weight of the base resin.

When the thermoplastic resin composition according to an embodiment includes no reactive additive (D), the deactivation of the hydroxyl group in the polycarbonate resin A and the low gloss characteristics of the thermoplastic resin composition may not be appropriately controlled, and accordingly, properties may be unintentionally deteriorated in the process of molding or using, and low gloss characteristics may hardly be obtained. On the other hand, when the thermoplastic resin composition includes the reactive additive (D) in an amount of greater than 5 parts by weight, the reactive additive (D) may deteriorate an inherent impact resistance function of the polycarbonate resin.

### (E) Aromatic Vinyl-Vinyl Cyanide Copolymer Having a Weight Average Molecular Weight of Greater Than or Equal to 4,000,000 q/mol

In an embodiment, the aromatic vinyl-vinyl cyanide copolymer having a weight average molecular weight of greater than or equal to 4,000,000 g/mol (E) functions to impart low gloss characteristics of the thermoplastic resin composition.

In an embodiment, the aromatic vinyl-vinyl cyanide copolymer having a weight average molecular weight of greater than or equal to 4,000,000 g/mol (E) may mean an aromatic vinyl-vinyl cyanide copolymer having a weight average molecular weight of greater than or equal to at least 4,000,000 g/mol, for example greater than or equal to 5,000,000 g/mol, for example 5,000,000 g/mol to 10,000,000 g/mol, for example 5,000,000 g/mol to 9,000,000 g/mol, for example 5,000,000 g/mol to 8,000,000 g/mol, for example 6,000,000 g/mol to 8,000,000 g/mol.

**In** the aromatic vinyl-vinyl cyanide copolymer having a weight average molecular weight of greater than or equal to 4,000,000 g/mol (E), the aromatic vinyl compound may be one or more selected from styrene, α-methylstyrene, p-methylstyrene, p-t-butylstyrene, 2,4-dimethylstyrene, chlorostyrene, vinyltoluene, and vinylnaphthalene.

**In** the aromatic vinyl-vinyl cyanide copolymer having a weight average molecular weight of greater than or equal to 4,000,000 g/mol (E), the vinyl cyanide compound may be may be one or more selected from acrylonitrile, methacrylonitrile, and fumaronitrile.

**In** an embodiment, the aromatic vinyl-vinyl cyanide copolymer having a weight average molecular weight of greater than or equal to 4,000,000 g/mol (E) may be a styrene-acrylonitrile copolymer (SAN) having a weight average molecular weight of greater than or equal to 4,000,000 g/mol.

**In** an embodiment, the aromatic vinyl-vinyl cyanide copolymer having a weight average molecular weight of greater than or equal to 4,000,000 g/mol (E) may be included in an amount of greater than 0 parts by weight, for example greater than or equal to 0.5 parts by weight, for example greater than or equal to 1 part by weight, and for example less than or equal to 10 parts by weight, for example less than or equal to 8 parts by weight, for example less than or equal to 6 parts by weight, for example less than or equal to 5 parts by weight, for example 0.5 to 10 parts by weight, for example 0.5 to 5 parts by weight, based on 100 parts by weight of a base resin.

When the copolymer (E) is not included or is included in too small amount, the effect of improving the low gloss characteristics of the thermoplastic resin composition cannot be exhibited, and when the amount exceeds 10 parts by weight, moldability and heat resistance of the thermoplastic resin composition may be lowered.

On the other hand, in an embodiment, a weight ratio of the aromatic vinyl-vinyl cyanide copolymer (E) having a weight average molecular weight of greater than or equal to 4,000,000 g/mol relative to the reactive additive (D) included in the thermoplastic resin composition may be greater than or equal to 1, for example, greater than or equal to 2, for example, greater than or equal to 3, and for example, less than 15, for example, less than or equal to 12, for example, less than or equal to 10, for example, 1 to 12, for example, 2 to 12, for example, 3 to 10.

When the weight ratio of the copolymer (E) relative to the reactive additive (D) is out of the above ranges, the low gloss characteristics of the thermoplastic resin composition may not be effectively improved, or even if the low gloss characteristics are improved, other properties (e.g., heat resistance, impact resistance, fluidity, and the like) may be greatly deteriorated.

### (F) Additives

The thermoplastic resin composition according to an embodiment may further include at least one type of additive in addition to the components (A) to (E) in order to balance properties under the condition of exhibiting excellent low gloss characteristics but not deteriorating the other properties and preventing property deterioration due to hydrolysis of the polycarbonate resin during the processing or the use or according to the final use of the thermoplastic resin composition.

Specifically, the additives may be flame retardants, nucleating agents, coupling agents, fillers, plasticizers, impact modifiers, lubricants, antibacterial agents, releasing agents, heat stabilizers, antioxidants, inorganic materials, ultraviolet (UV) stabilizers, antistatic agents, pigments, dyes, and the like and may be used alone or in a combination of two or more.

These additives may be appropriately included within a range that does not impair the physical properties of the thermoplastic resin composition, and specifically, may be included in an amount of less than or equal to 20 parts by weight based on a total amount, 100 parts by weight of components (A) to (E), but are not limited thereto.

On the other hand, the thermoplastic resin composition according to an embodiment may be mixed with other resin or other rubber component and used together.

On the other hand, another embodiment provides a molded article containing a thermoplastic resin composition according to an embodiment. The molded article may be manufactured by various methods known in the art, such as injection molding and extrusion molding using the thermoplastic resin composition.

The molded article may be advantageously used for various electric and electronic parts, building materials, sports goods, automobile interior/exterior parts used outdoors by greatly improving low gloss characteristics while maintaining mechanical properties such as impact resistance and heat resistance. Specifically, the molded articles may be used in satellite antennas, door panels, automobile radiator grills, side mirror housings, etc., but are not limited thereto.

Hereinafter, preferred embodiments of the present invention will be described. These examples, however, are not in any sense to be interpreted as limiting the scope of the invention.

### Examples

Hereinafter, the present invention is illustrated in more detail with reference to examples and comparative examples. However, the following examples and comparative examples are provided for the purpose of descriptions and the present invention is not limited thereto.

### Examples 1 to 7

Each component shown in Table 1 was mixed in an amount shown in Table 1 and then, melt and extruded into a pellet-shaped thermoplastic resin composition. The extrusion was conducted by using a twin-screw extruder having L/D = 44 and a diameter of 35 mm and set at barrel temperature of 260 °C.

### Comparative Examples 1 to 8

Pellet-shaped thermoplastic resin compositions were prepared according to the same method as Example 1 except that the components and the amounts shown in Table 2 were used.

**(Table 1)**

| Components | | unit | Examples | | | | | | |
|---|---|---|---|---|---|---|---|---|---|
| | | | 1 | 2 | 3 | 4 | 5 | 6 | 7 |
| Base resin | (A) | wt% | 55 | 55 | 55 | 55 | 55 | 75 | 55 |
| | (B) | wt% | 20 | 20 | 20 | 20 | 20 | 10 | 20 |
| | (C) | wt% | 25 | 25 | 25 | 25 | 25 | 15 | 25 |
| (D) | type-I | parts by weight | 0.3 | 0.5 | 1.0 | 0 | 0 | 0.3 | 0.5 |
| | type-II | parts by weight | 0 | 0 | 0 | 0.5 | 1.0 | 0 | 0.5 |
| (E) | | parts by weight | 3 | 3 | 3 | 3 | 3 | 3 | 3 |
| E/D weight ratio | | - | 10 | 6 | 3 | 6 | 3 | 10 | 3 |

| | | | | | | | | | |
|---|---|---|---|---|---|---|---|---|---|
| Part by weight: part by weight based on 100 parts by weight of base resin ((A)+(B)+(C)) | | | | | | | | | |

**(Table 2)**

| Components | | unit | Comparative Examples | | | | | | | |
|---|---|---|---|---|---|---|---|---|---|---|
| | | | 1 | 2 | 3 | 4 | 5 | 6 | 7 | 8 |
| Base resin | (A) | wt% | 55 | 55 | 55 | 55 | 55 | 90 | 20 | 55 |
| | (B) | wt% | 20 | 20 | 20 | 20 | 20 | 5 | 40 | 20 |
| | (C) | wt% | 25 | 25 | 25 | 25 | 25 | 5 | 40 | 25 |
| (D) | type-I | part by weight | 0 | 1 | 0 | 10 | 1 | 1 | 1 | 3 |
| | type-II | part by weight | 0 | 0 | 1 | 0 | 0 | 0 | 0 | 3 |
| (E) | | part by weight | 3 | 0 | 0 | 3 | 15 | 3 | 3 | 3 |
| E/D weight ratio | | - | N/A | 0 | 0 | 0.3 | 15 | 3 | 3 | 0.5 |

| | | | | | | | | | | |
|---|---|---|---|---|---|---|---|---|---|---|
| Part by weight: part by weight based on 100 parts by weight of base resin ((A)+(B)+(C)) | | | | | | | | | | |

(A) Polycarbonate Resin: A polycarbonate resin (Manufacturer: Lotte Chemical Corp.) was prepared in a melt polymerization method and had a weight average molecular weight of about 28,000 g/mol, which was measured through gel permeation chromatography (GPC), and a terminal hydroxyl content of about 30 mol%.
(B) Acrylate-based Graft Copolymer: An acrylate-styrene-acrylonitrile graft copolymer (Manufacturer: Lotte Chemical Corp.) was prepared by graft-copolymerizing 50 parts by weight of a butyl acrylate rubbery polymer having an average particle diameter of 180 nm into 50 parts by weight of styrene and acrylonitrile
(C) Aromatic Vinyl-Vinyl Cyanide Copolymer: A styrene-acrylonitrile copolymer (Manufacturer: Lotte Chemical Corp.) having a weight average molecular weight of about 110,000 g/mol, which was measured through gel permeation chromatography (GPC), and an acrylonitrile content of about 24 wt%.
(D) Reactive Additives
   Type-I: Epoxide group-containing reactive additive represented by Chemical Formula 2 (m = 0 and n = 1 in Chemical Formula 2) (Manufacturer: Momentive Performance Materials)
   Type-II: Epoxide group-containing reactive additive represented by Chemical Formula 2 (m = n = 1 in Chemical Formula 2) (Manufacturer: Daicel Corp.)
(E) An aromatic vinyl-vinyl cyanide copolymer having a weight average molecular weight of greater than or equal to 4,000,000 g/mol: A styrene-acrylonitrile copolymer having a weight average molecular weight of about 5,000,000 g/mol (Manufacturer: Zibo Huaxing Additives)

### Property Evaluation

The pellets according to Examples 1 to 7 and Comparative Examples 1 to 8 were dried at 80 °C for 6 hours and prepared into specimens for a property evaluation by using a 6 oz injection molding machine set at a cylinder temperature of 260 °C and a mold temperature of 60 °C, and then, each specimen was measured with respect to gloss, impact resistance, and fluidity as follows, and the results are respectively shown in Table 3 (Examples 1 to 7) and Table 4 (Comparative Examples 1 to 8).
(1) Impact Resistance (unit: kgf-cm/cm): Each 3.2 mm and 6.4 mm-thick specimen was respectively measured with respect to notched Izod impact strength according to ASTM D256.
(2) Fluidity (unit: g/10 min): A melt flow index (MI) was measured according to ASTM D1238 at 220 °C under a load of 10 kg.
(3) Gloss (unit: GU): measured at each angle of 20 °, 45 °, 60 °, 75 °, 85 ° according to JIS Z 8741 by using a VG7000 gloss meter made by Nippon Denshoku Industries Co., Ltd.

**(Table 3)**

| Properties | | Examples | | | | | | |
|---|---|---|---|---|---|---|---|---|
| | | 1 | 2 | 3 | 4 | 5 | 6 | 7 |
| Impact strength (kgf·cm/cm) | 3.2 mm | 43.5 (426.3 J/m) | 42.2 (413.56 J/m) | 41.3 (404.74 J/m) | 48. 1(471.38 J/m) | 40.1 (392.98 J/m) | 69.1 (677.18 J/m) | 41.8 (409.64 J/m) |
| | 6.4 mm | 18.1 (177.38 J/m) | 14.8 (145.04 J/m) | 13.7 (134.26 J/m) | 15.4 (150.92 J/m) | 14.1 (138.18 J/m) | 34.5 (338.1 J/m) | 13.9 (136.22 J/m) |
| Melt flow index (g/10min) | | 22.0 | 19.2 | 14.0 | 17.2 | 16.1 | 9.8 | 14.8 |
| Gloss (GU) | 20 ° | 4.3 | 4.6 | 4.4 | 5.7 | 4.4 | 4.1 | 4.6 |
| | 45 ° | 21.0 | 22.5 | 23.9 | 25.3 | 21.8 | 20.8 | 23.1 |
| | 60 ° | 25.0 | 27.8 | 31.3 | 31.3 | 27.1 | 23.9 | 31.6 |
| | 75 ° | 55.8 | 59.5 | 66.6 | 62.8 | 58.9 | 51.4 | 67.0 |
| | 85 ° | 81.2 | 84.4 | 88.5 | 85.6 | 84.6 | 79.6 | 88.7 |

**(Table 4)**

| Properties | | Comparative Examples | | | | | | | |
|---|---|---|---|---|---|---|---|---|---|
| | | 1 | 2 | 3 | 4 | 5 | 6 | 7 | 8 |
| Impact strength (kgf-cm/cm) | 3.2 mm | 42.7 (418.46 J/m) | 44.5 (436.1 J/m) | 42.0 411.6 J/m) | 24.4 (239.12 J/m) | 35.2 (344.96 J/m) | 75.4 (738.92 J/m) | 21.3 (208.74 J/m) | 25.6 (250.880 J/m) |
| | 6.4 mm | 18.6 (182.28 J/m) | 16.2 (158.76 J/m) | 14.6 (143.08 J/m) | 6.5 (63.7 J/m) | 10.2 (99.96 J/m) | 48.5 (475.3 J/m) | 10.5 (102.9 J/m) | **8.1** (79.38 J/m) |
| Melt flow index (g/10min) | | 29.2 | 35.9 | 33.8 | 6.7 | 4.5 | 0.8 | 45.2 | 7.7 |
| Gloss (GU) | 20 ° | 98.1 | 97.5 | 98.5 | 4.8 | 4.3 | 7.8 | 6.3 | 4.4 |
| | 45° | 99.0 | 99.0 | 98.7 | 26.5 | 21.5 | 31.0 | 29.2 | 22.5 |
| | 60 ° | 99.8 | 99.4 | 99 | 30.2 | 31.5 | 44.5 | 38.6 | 30.1 |
| | 75 ° | 99.4 | 99.1 | 99.1 | 57.4 | 67.5 | 71.6 | 69.8 | 54.3 |
| | 85 ° | 99.2 | 99.0 | 99.6 | 83.2 | 87.4 | 89.7 | 88.5 | 81.9 |

Referring to Tables 1 to 4, the specimens formed of the thermoplastic resin compositions according to the example embodiments maintained excellent impact resistance and fluidity as well as exhibited excellent low gloss characteristics.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A thermoplastic resin composition, comprising
based on 100 parts by weight of a base resin comprising
(A) 40 to 80 wt% of a polycarbonate resin;
(B) 5 to 35 wt% of an acrylate-based graft copolymer; and
(C) 10 to 40 wt% of an aromatic vinyl-vinyl cyanide copolymer having a weight average molecular weight of 80,000 g/mol to 200,000 g/mol;
(D) an epoxide group-containing reactive additive, and
(E) an aromatic vinyl-vinyl cyanide copolymer having a weight average molecular weight of greater than or equal to 4,000,000 g/mol,
wherein a weight ratio of the aromatic vinyl-vinyl cyanide copolymer (E) having a weight average molecular weight of greater than or equal to 4,000,000 g/mol to the reactive additive (D) is 1 to 12,
said weight average molecular weight being measured by gel permeation chromatography determined as indicated in the description.

2. The thermoplastic resin composition of claim 1, wherein the polycarbonate resin (A) is prepared by a melt polymerization method.

3. The thermoplastic resin composition of claim 1 or claim 2, wherein
based on 100 parts by weight of the base resin,
the reactive additive (D) is included in an amount of 0.1 parts by weight to 5 parts by weight, and
the aromatic vinyl-vinyl cyanide copolymer (E) having a weight average molecular weight of greater than or equal to 4,000,000 g/mol is included in an amount of 0.5 parts by weight to 10 parts by weight.

4. The thermoplastic resin composition of any one of claim 1 to claim 3, wherein the reactive additive (D) comprises a compound represented by Chemical Formula 1:
[Chemical Formula 1] (Q)m - L - (R)n
wherein, in Chemical Formula 1,
Q and R are independently one or more selected from moieties represented by Chemical Formula A to Chemical Formula C,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1, 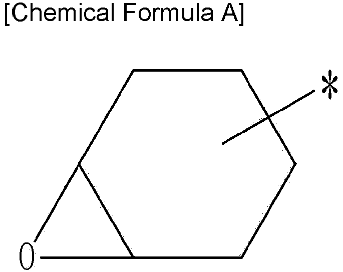 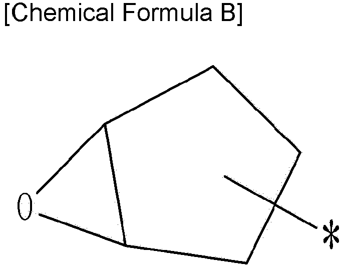 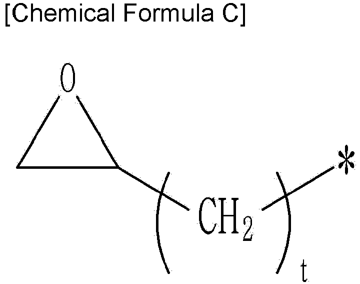
wherein, in Chemical Formula A to Chemical Formula C, t is an integer of 1 to 10 and * indicates a linking portion.

5. The thermoplastic resin composition of claim 4, wherein the compound represented by Chemical Formula 1 is represented by Chemical Formula 2: 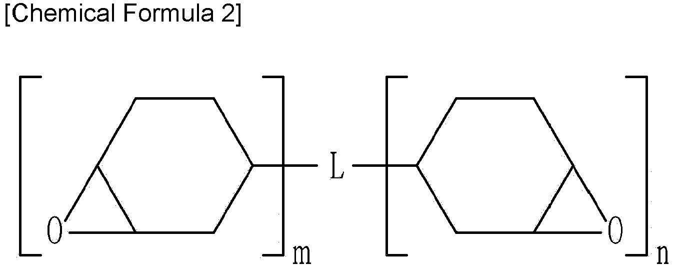 wherein, in Chemical Formula 2,
L is one or more selected from a substituted or unsubstituted C1 to C20 alkylene group, a substituted or unsubstituted C1 to C20 heteroalkylene group, a substituted or unsubstituted C3 to C20 cycloalkylene group, a substituted or unsubstituted C2 to C20 heterocycloalkylene group, a substituted or unsubstituted C6 to C20 arylene group, and a substituted or unsubstituted C1 to C20 heteroarylene group, and
m and n are each 0 or 1, provided that at least one of m and n is 1.

6. The thermoplastic resin composition of claim 4 or claim 5, wherein L is selected from a substituted or unsubstituted C1 to C20 heteroalkylene group including 1 to 3 heteroatoms selected from N, O, S, and Si, a substituted or unsubstituted C2 to C20 heterocycloalkylene group including 1 to 3 heteroatoms selected from N, O, S, and Si, and a substituted or unsubstituted C1 to C20 heteroarylene group including 1 to 3 heteroatoms selected from N, O, S, and Si, or
L is selected from a C2 to C20 alkylene group having -(CH₂)₂- unit structure, a C6 to C20 cycloalkylene group, and a C6 to C20 arylene group,
wherein the -(CH₂)₂- units structure is substituted with an ester group.

7. The thermoplastic resin composition of any one of claim 1 to claim 6, wherein the acrylate-based graft copolymer (B) comprises an acrylate-based rubber polymer having an average particle diameter of 100 nm to 300 nm, said average particle diameter referring to a volume average diameter and being a Z-average mean particle diameter which is measured using a dynamic light scattering analyzer.

8. The thermoplastic resin composition of any one of claim 1 to claim 7, wherein the acrylate-based graft copolymer (B) is obtained by graft polymerization of 40 wt% to 60 wt% of a mixture of an aromatic vinyl compound and a vinyl cyanide compound, to 40 wt% to 60 wt% of an acrylate-based rubber polymer.

9. The thermoplastic resin composition of any one of claim 1 to claim 8, wherein the acrylate-based graft copolymer (B) is an acrylate-styrene-acrylonitrile graft copolymer.

10. The thermoplastic resin composition of any one of claim 1 to claim 9, wherein the aromatic vinyl-vinyl cyanide copolymer (C) is a copolymer of a monomer mixture including 60 wt% to 85 wt% of an aromatic vinyl compound and 15 wt% to 40 wt% of a vinyl cyanide compound.

11. The thermoplastic resin composition of any one of claim 1 to claim 10, wherein the aromatic vinyl-vinyl cyanide copolymer (E) having a weight average molecular weight of greater than or equal to 4,000,000 g/mol is a styrene-acrylonitrile copolymer having a weight average molecular weight of greater than or equal to 4,000,000 g/mol.

12. The thermoplastic resin composition of any one of claim 1 to claim 11, wherein the thermoplastic resin composition further comprises at least one additive selected from a flame retardant, a nucleating agent, a coupling agent, a filler, a plasticizer, an impact modifier, a lubricant, an antibacterial agent, a releasing agent, a heat stabilizer, an antioxidant, an inorganic material, an ultraviolet (UV) stabilizer, an antistatic agent, a pigment, and a dye.

13. A molded article manufactured from the thermoplastic resin composition of any one of claim 1 to claim 12.

## Patentansprüche

1. Thermoplastische Harzzusammensetzung, umfassend
auf 100 Gewichtsteile eines Basisharzes bezogen, umfassend
(A) 40 bis 80 Gew.-% eines Polycarbonatharzes;
(B) 5 bis 35 Gew.-% eines Pfropfcopolymers auf Acrylatbasis; und
(C) 10 bis 40 Gew.-% eines aromatischen Vinyl-Vinylcyanid-Copolymers, das ein gewichtsmittleres Molekulargewicht von 80.000 g/mol bis 200.000 g/mol aufweist;
(D) ein epoxidgruppen-haltiges reaktives Additiv, und
(E) ein aromatisches Vinyl-Vinylcyanid-Copolymer, das ein gewichtsmittleres Molekulargewicht von größer als oder gleich 4.000.000 g/mol aufweist,
wobei ein Gewichtsverhältnis des aromatischen Vinyl-Vinylcyanid-Copolymers (E), das ein gewichtsmittleres Molekulargewicht von größer als oder gleich 4.000.000 g/mol aufweist, zu dem reaktiven Additiv (D) 1 bis 12 beträgt,
wobei das gewichtsmittlere Molekulargewicht durch Gelpermeationschromatographie gemessen wird, die wie in der Beschreibung angegeben bestimmt wird.

2. Thermoplastische Harzzusammensetzung nach Anspruch 1, wobei das Polycarbonatharz (A) durch ein Schmelzpolymerisationsverfahren hergestellt wird.

3. Thermoplastische Harzzusammensetzung nach Anspruch 1 oder Anspruch 2, wobei, auf 100 Gewichtsteile des Basisharzes bezogen,
das reaktive Additiv (D) in einer Menge von 0,1 Gewichtsteilen bis 5 Gewichtsteilen beinhaltet ist, und
das aromatische Vinyl-Vinylcyanid-Copolymer (E), das ein gewichtsmittleres Molekulargewicht von größer als oder gleich 4.000.000 g/mol aufweist, in einer Menge von 0,5 Gewichtsteilen bis 10 Gewichtsteilen beinhaltet ist.

4. Thermoplastische Harzzusammensetzung nach einem von Anspruch 1 bis Anspruch 3, wobei das reaktive Additiv (D) eine Verbindung umfasst, dargestellt durch chemische Formel 1:
[Chemische Formel 1] (Q)m - L - (R)n
wobei in chemischer Formel 1,
Q und R unabhängig voneinander eines oder mehrere sind, ausgewählt aus Einheiten, die durch chemische Formel A bis chemische Formel C dargestellt sind,
L eines oder mehrere ist, ausgewählt aus einer substituierten oder unsubstituierten C1- bis C20-Alkylengruppe, einer substituierten oder unsubstituierten C1- bis C20-Heteroalkylengruppe, einer substituierten oder unsubstituierten C3- bis C20-Cycloalkylengruppe, einer substituierten oder unsubstituierten C2- bis C20-Heterocycloalkylengruppe, einer substituierten oder unsubstituierten C6- bis C20-Arylengruppe und einer substituierten oder unsubstituierten C1- bis C20-Heteroarylengruppe, und
m und n jeweils 0 oder 1 sind, vorausgesetzt, dass mindestens eines von m und n 1 ist, 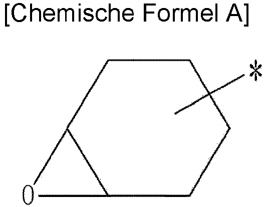 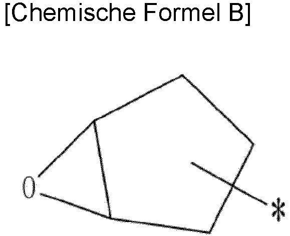 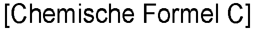 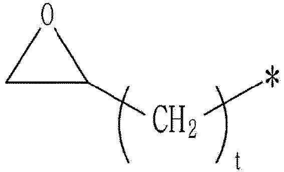
wobei in chemischer Formel A bis chemischer Formel C t eine ganze Zahl von 1 bis 10 ist und * auf einen Verbindungsabschnitt hinweist.

5. Thermoplastische Harzzusammensetzung nach Anspruch 4, wobei die durch chemische Formel 1 dargestellte Verbindung durch chemische Formel 2 dargestellt ist: 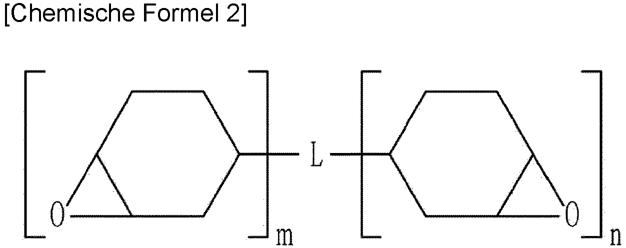 wobei in chemischer Formel 2
L eines oder mehrere ist, ausgewählt aus einer substituierten oder unsubstituierten C1- bis C20-Alkylengruppe, einer substituierten oder unsubstituierten C1- bis C20-Heteroalkylengruppe, einer substituierten oder unsubstituierten C3- bis C20-Cycloalkylengruppe, einer substituierten oder unsubstituierten C2- bis C20-Heterocycloalkylengruppe, einer substituierten oder unsubstituierten C6- bis C20-Arylengruppe und einer substituierten oder unsubstituierten C1- bis C20-Heteroarylengruppe, und
m und n jeweils 0 oder 1 sind, vorausgesetzt, dass mindestens eines von m und n 1 ist.

6. Thermoplastische Harzzusammensetzung nach Anspruch 4 oder Anspruch 5, wobei L ausgewählt ist aus einer substituierten oder unsubstituierten C1- bis C20-Heteroalkylengruppe, die 1 bis 3 Heteroatome beinhaltet, ausgewählt aus **N,** O, S, und Si, einer substituierten oder unsubstituierten C2- bis C20-Heterocycloalkylengruppe, die 1 bis 3 Heteroatome beinhaltet, ausgewählt aus N, O, S, und Si, und einer substituierten oder unsubstituierten C1- bis C20-Heteroarylengruppe, die 1 bis 3 Heteroatome beinhaltet, ausgewählt aus N, O, S, und Si, oder
L ausgewählt ist aus einer C2- bis C20-Alkylengruppe mit Einheitsstruktur -(CH₂)₂-, einer C6- bis C20-Cycloalkylengruppe und einer C6- bis C20-Arylengruppe,
wobei die Einheitsstruktur -(CH₂)₂- mit einer Estergruppe substituiert ist.

7. Thermoplastische Harzzusammensetzung nach einem von Anspruch 1 bis Anspruch 6, wobei das Pfropfcopolymer auf Acrylatbasis (B) ein Kautschukpolymer auf Acrylatbasis umfasst, das einen mittleren Partikeldurchmesser von 100 nm bis 300 nm aufweist, wobei sich der mittlere Partikeldurchmesser auf einen volumenmittleren Durchmesser bezieht und ein Z-mittlerer Partikeldurchmesser ist, der unter Verwendung eines dynamischen Lichtstreuanalysators gemessen wird.

8. Thermoplastische Harzzusammensetzung nach einem von Anspruch 1 bis Anspruch 7, wobei das Pfropfcopolymer auf Acrylatbasis (B) durch Pfropfpolymerisation von 40 Gew.-% bis 60 Gew.-% eines Gemisches aus einer aromatischen Vinylverbindung und einer Vinylcyanidverbindung mit 40 Gew.-% bis 60 Gew.-% eines Kautschukpolymers auf Acrylatbasis erhalten wird.

9. Thermoplastische Harzzusammensetzung nach einem von Anspruch 1 bis Anspruch 8, wobei das Pfropfcopolymer auf Acrylatbasis (B) ein Acrylat-Styrol-Acrylnitril-Pfropfcopolymer ist.

10. Thermoplastische Harzzusammensetzung nach einem von Anspruch 1 bis Anspruch 9, wobei das aromatische Vinyl-Vinylcyanid-Copolymer (C) ein Copolymer aus einem Monomergemisch ist, das 60 Gew.-% bis 85 Gew.-% einer aromatischen Vinylverbindung und 15 Gew.-% bis 40 Gew.-% einer Vinylcyanidverbindung beinhaltet.

11. Thermoplastische Harzzusammensetzung nach einem von Anspruch 1 bis Anspruch 10, wobei das aromatische Vinyl-Vinylcyanid-Copolymer (E), das ein gewichtsmittleres Molekulargewicht von größer als oder gleich 4.000.000 g/mol aufweist, ein Styrol-Acrylnitril-Copolymer ist, das ein gewichtsmittleres Molekulargewicht von größer als oder gleich 4.000.000 g/mol aufweist.

12. Thermoplastische Harzzusammensetzung nach einem von Anspruch 1 bis Anspruch 11, wobei die thermoplastische Harzzusammensetzung weiter mindestens ein Additiv umfasst, ausgewählt aus einem Flammschutzmittel, einem Nukleierungsmittel, einem Kopplungsmittel, einem Füllstoff, einem Weichmacher, einem Schlagzähmodifizierer, einem Schmiermittel, einem antibakteriellen Mittel, einem Trennmittel, einem Wärmestabilisator, einem Antioxidationsmittel, einem anorganischen Material, einem Ultraviolett- (UV-) Stabilisator, einem antistatischen Mittel, einem Pigment, und einem Farbstoff.

13. Formerzeugnis, das aus der thermoplastischen Harzzusammensetzung nach einem von Anspruch 1 bis Anspruch 12 hergestellt ist.

## Revendications

1. Composition de résine thermoplastique, comprenant
par rapport à 100 parties en poids d'une résine de base comprenant
(A) 40 à 80% en poids d'une résine polycarbonate ;
(B) 5 à 35% en poids d'un copolymère greffé à base d'acrylate ; et
(C) 10 à 40% en poids d'un copolymère de vinyle aromatique-cyanure de vinyle ayant un poids moléculaire moyen en poids de 80 000 g/mol à 200 000 g/mol ;
(D) un additif réactif contenant un groupe époxyde, et
(E) un copolymère de vinyle aromatique-cyanure de vinyle ayant un poids moléculaire moyen en poids supérieur ou égal à 4 000 000 g/mol,
dans laquelle le rapport en poids du copolymère de vinyle aromatique-cyanure de vinyle (E) ayant un poids moléculaire moyen en poids supérieur ou égal à 4 000 000 g/mol par rapport à l'additif réactif (D) va de 1 à 12,
ledit poids moléculaire moyen en poids étant mesuré par chromatographie par perméation sur gel déterminée comme indiqué dans la description.

2. Composition de résine thermoplastique de la revendication 1, dans laquelle la résine polycarbonate (A) est préparée par un procédé de polymérisation par fusion.

3. Composition de résine thermoplastique de la revendication 1 ou 2, dans laquelle,
par rapport à 100 parties en poids de la résine de base,
l'additif réactif (D) est inclus en une quantité de 0,1 partie en poids à 5 parties en poids, et
le copolymère de vinyle aromatique-cyanure de vinyle (E) ayant un poids moléculaire moyen en poids supérieur ou égal à 4 000 000 g/mol est inclus en une quantité de 0,5 partie en poids à 10 parties en poids.

4. Composition de résine thermoplastique de l'une quelconque des revendications 1 à 3, dans laquelle l'additif réactif (D) comprend un composé représenté par la Formule Chimique 1 :
[Formule Chimique 1] (Q)m - L - (R)n
dans laquelle, dans la Formule Chimique 1,
Q et R représentent indépendamment un ou plusieurs choisis parmi les groupements représentés par les Formules Chimiques A à C,
L représente un ou plusieurs choisis parmi un groupe alkylène en C1 à C20 substitué ou non substitué, un groupe hétéroalkylène en C1 à C20 substitué ou non substitué, un groupe cycloalkylène en C3 à C20 substitué ou non substitué, un groupe hétérocycloalkylène en C2 à C20 substitué ou non substitué, un groupe arylène en C6 à C20 substitué ou non substitué, et un groupe hétéroarylène en C1 à C20 substitué ou non substitué, et
m et n sont chacun égaux à 0 ou 1, à condition qu'au moins un de m et n soit 1, 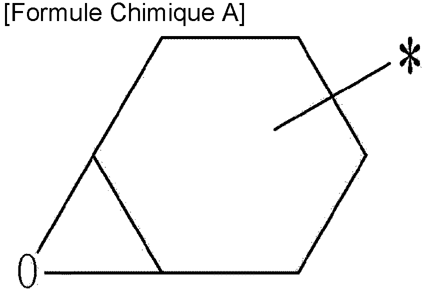 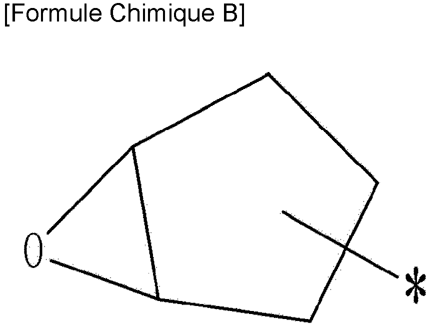 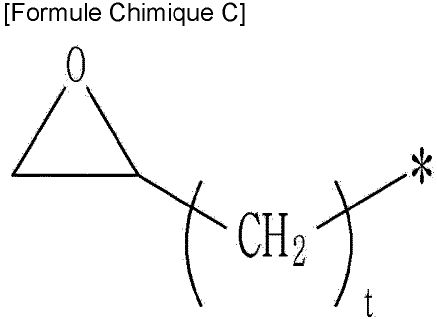
où, dans les Formules Chimiques A à C, t est un nombre entier de 1 à 10 et * indique une partie de liaison.

5. Composition de résine thermoplastique de la revendication 4, dans laquelle le composé représenté par la Formule Chimique 1 est représenté par la Formule Chimique 2 : 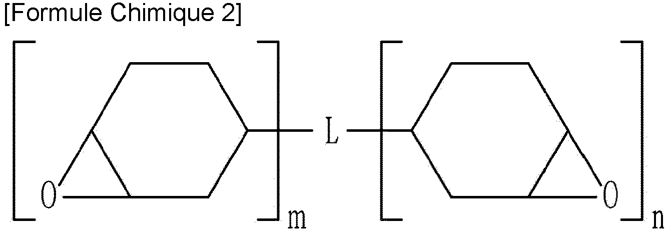 dans laquelle, dans la Formule Chimique 2,
L représente un ou plusieurs choisis parmi un groupe alkylène en C1 à C20 substitué ou non substitué, un groupe hétéroalkylène en C1 à C20 substitué ou non substitué, un groupe cycloalkylène en C3 à C20 substitué ou non substitué, un groupe hétérocycloalkylène en C2 à C20 substitué ou non substitué, un groupe arylène en C6 à C20 substitué ou non substitué, et un groupe hétéroarylène en C1 à C20 substitué ou non substitué, et
m et n sont chacun égaux à 0 ou 1, à condition qu'au moins l'un de m et n soit 1.

6. Composition de résine thermoplastique de la revendication 4 ou 5, dans laquelle L est choisi parmi un groupe hétéroalkylène en C1 à C20 substitué ou non substitué comprenant 1 à 3 hétéroatomes choisis parmi N, O, S et Si, un groupe hétérocycloalkylène en C2 à C20 substitué ou non substitué comprenant 1 à 3 hétéroatomes choisis parmi N, O, S et Si, et un groupe hétéroarylène en C1 à C20 substitué ou non substitué comprenant 1 à 3 hétéroatomes choisis parmi N, O, S et Si, ou
L est choisi parmi un groupe alkylène en C2 à C20 ayant une structure unitaire -(CH₂)₂-, un groupe cycloalkylène en C6 à C20 et un groupe arylène en C6 à C20,
dans laquelle la structure unitaire -(CH₂)₂- est substituée par un groupe ester.

7. Composition de résine thermoplastique de l'une quelconque des revendications 1 à 6, dans laquelle le copolymère greffé à base d'acrylate (B) comprend un polymère de caoutchouc à base d'acrylate ayant un diamètre moyen de particules de 100 nm à 300 nm, ledit diamètre moyen de particules se référant à un diamètre moyen en volume et étant un diamètre moyen de particules en moyenne Z qui est mesuré en utilisant un analyseur de diffusion dynamique de la lumière.

8. Composition de résine thermoplastique de l'une quelconque des revendications 1 à 7, dans laquelle le copolymère greffé à base d'acrylate (B) est obtenu par polymérisation greffée de 40% en poids à 60% en poids d'un mélange d'un composé vinyle aromatique et d'un composé cyanure de vinyle, sur 40% en poids à 60% en poids d'un polymère de caoutchouc à base d'acrylate.

9. Composition de résine thermoplastique de l'une quelconque des revendications 1 à 8, dans laquelle le copolymère greffé à base d'acrylate (B) est un copolymère greffé acrylate-styrène-acrylonitrile.

10. Composition de résine thermoplastique de l'une quelconque des revendications 1 à 9, dans laquelle le copolymère de vinyle aromatique-cyanure de vinyle (C) est un copolymère d'un mélange de monomères comprenant 60% en poids à 85% en poids d'un composé vinyle aromatique et 15% en poids à 40% en poids d'un composé cyanure de vinyle.

11. Composition de résine thermoplastique de l'une quelconque des revendications 1 à 10, dans laquelle le copolymère de vinyle aromatique-cyanure de vinyle (E) ayant un poids moléculaire moyen en poids supérieur ou égal à 4 000 000 g/mol est un copolymère styrène-acrylonitrile ayant un poids moléculaire moyen en poids supérieur ou égal à 4 000 000 g/mol.

12. Composition de résine thermoplastique de l'une quelconque des revendications 1 à 11, dans laquelle la composition de résine thermoplastique comprend en outre au moins un additif choisi parmi un ignifugeant, un agent de nucléation, un agent de couplage, une charge, un plastifiant, un modificateur d'impact, un lubrifiant, un agent antibactérien, un agent de démoulage, un stabilisant thermique, un antioxydant, un matériau inorganique, un stabilisant ultraviolet (UV), un agent antistatique, un pigment et un colorant.

13. Article moulé fabriqué à partir de la composition de résine thermoplastique de l'une quelconque des revendications 1 à 12.
